# EUROPÄISCHE PATENTANMELDUNG

(11) **EP 1 170 116 A1**
(43) Veröffentlichungstag der Anmeldung: **09.01.2002**
(21) Anmeldenummer: 01113869.0
(22) Anmeldetag: 07.06.2001
(51) Int. Cl.: B29C 67/24, C08L 51/06, C08J 3/24

(54) **Feuchtigkeitsvernetzbare Profile aus Polyolefinelastomeren**

(30) Priorität: 05.07.2000 DE 10032643
(71) Anmelder: REHAU AG + Co, 95111 Rehau (DE)
(72) Erfinder: Steffl, Udo, Dr., 95111 Rehau (DE); Rhönisch, Thomas, Dr., 95111 Rehau (DE)

(57) **Zusammenfassung**

Es werden feuchtigkeitsvernetzbare Profile aus Polyolefinelastomeren beschrieben, die gekennzeichnet sind durch 100 Gewichtsteile einer silangepfropften Mischung eines Ethylen ₒC-Olefin-Copolymeren mit mehr als drei Kohlenstoffatomen und einem oder mehreren kristallinen Polyolefinen mit einem Schmelzpunkt größer 100 °C, sowie 0 - 400 Gewichtsteilen eines Füllstoffs und/oder einer halogenhaltigen Verbindung und/oder einer synergistischen Mischung aus halogenhaltigen Verbindungen mit Antimontrioxid. Die feuchtigkeitsvernetzbare Polyolefinmischung kann erzeugt werden entweder durch separaten Pdropfungsschritt oder gleichzeitig mit der Profilherstellung, wobei organische Silane der allgemeinen Formel RSiX₃ in der Schmelze der Polyolefinmischung in Gegenwart radikalerzeugender Komponenten umgesetzt werden.
Derartig hergestellte Profile können vorzugsweise zur Herstellung von Schläuchen Verwendung finden, beispielsweise für Anwendungen in der Medizin, im Maschinenbau, im Automobilbau oder im Bausektor.

## Beschreibung

Die vorliegende Erfindung betrifft Profile aus silangepfropften, flexiblen Polyolefinelastomeren.

Derartige Profile, wie Dichtungs- oder Möbelprofile und Schlauchprofile werden aus einer Vielzahl von Polymerwerkstoffen hergestellt. Dabei werden sowohl Thermoplaste als auch Elastomere und thermoplastische Elastomere eingesetzt.
Im Bereich der Thermoplaste werden nach wie vor grosse Mengen an Poly(vinylchlorid) eingesetzt. Im Bereich der Elastomeren sind vernetzte Polyolefinkautschuke (Ethylen-Propylen- oder Ethylen-Propylen-Dienkautschuke) in Verwendung.

Die Vernetzung der Polyolefinkautschuke kann nach verschiedenen chemischen, aber auch physikalischen Methoden erfolgen.
Wie beispielsweise von W. Hoffmann: "Vernetzungsmittel in Ethylen-Propylenkautschuk" in Kautschuk, Gummi, Kunststoff 40. Jahrgang, Nr. 4/1987, S. 308 ff beschrieben, kann bei den technisch bedeutsamen Vernetzungstechnologien zwischen Schwefelvernetzung, Peroxidvernetzung und Strahlenvernetzung unterschieden werden.

Durch chemische Modifizierung der Ethylen-Propylen-Kautschuke sind weitere Vulkanisationsvarianten denkbar.
Silanfunktionalisierte vernetzbare EPDM-Typen finden vor allem Interesse in der Kabel-, aber auch in der Bauindustrie. Der Silanzusatz soll dort in erster Linie die Wasserbeständigkeit von z B Kabeln erhöhen.

Das letztgenannte Silanvernetzungsverfahren unterscheidet sich von den anderen Vernetzungsmethoden vor allem durch die Prozesstechnik. Dabei werden in einem Primärschritt zunächst Polymerkettenradikale mit Hilfe üblicher Radikalinitiatoren erzeugt. An diese reaktiven Stellen addieren sich Silanmoleküle mit ihrer Vinylfunktion. Die silangepfropften Polymere befinden sich hier noch im thermoplastischen Zustand. Die eigentliche Vernetzung findet dann nach der Formgebung durch eine Silankondensationsreaktion mittels Feuchtigkeit statt.

Diese Vernetzungstechnik ist in der US 3,646,155 beschrieben.

Die Silantechnologie hat Bedeutung bei der Fertigung von Kunststoffrohren aus vernetztem Niederdruckpolyethylen (HDPE) sowie wie von B. E. Roberts und S. Verne in Proc. Golden Jubilee Conf. "Polyethylenes 1933-1983", London, UK, Juni 1983, Institute of Materials, Paper C3-1-1, beschrieben, zur Isolation und Ummantelung von Kabeln aus Hochdruckpolyethylen (LDPE) und "linear low density polyethylen" (LLDPE) gefunden. Dabei handelt es sich in der Regel um wenig flexible bis steife (Rohr) kristalline Basismaterialien. Eine Verwendung von elastomeren silanvernetzten Poly(ethen-co-α-olefinen) für Schläuche und Profile wurde nicht erwähnt.

Herkömmliche Dichtungs- oder Schlauchprofile aus vernetzten Kautschuken weisen eine Reihe von Nachteilen auf. Sowohl bei der Peroxidvernetzung als auch bei der Schwefelvernetzung führt die Fülle an Zuschlagstoffen wie Vernetzungshilfsmitteln, Coaktivatoren oder Verzögerer zu Ausblühungserscheinungen und Geruchsbelästigungen. Auch Verfärbung und Abfärbung der Produkte wird beobachtet, eine Einfärbung der Profile in hellen Farbtönen ist nicht gegeben. Der Umgang mit den Ballenkautschuken erzeugt großen Aufwand bei der Verarbeitung, eine thermoplastische Verarbeitbarkeit ist nicht gegeben. Ethylen-Propylen-Dienkautschuke weisen nach der Vernetzung nach wie vor einen Rest an Doppelbindungen auf, so daß die Alterungsstabilität eingeschränkt ist oder ein spezieller Schutz gegen UV-Einwirkung, Feuchte- und Temperaturschwankungen notwendig wird.

Hier setzt die Erfindung an, die es sich zur Aufgabe gestellt hat, ein Polymermaterial zur Verfügung zu stellen, welches die vorstehend genannten Nachteile und Probleme überwindet und das über eine thermoplastische Verarbeitung zur Herstellung von beliebig einfärbbaren, alterungsstabilen Profilen und Schläuchen geeignet ist und keine Ausblüh- oder Ausschwitzungserscheinungen zeigt. Besonderes Kennzeichen der Erfindung ist die Silanpfropfung von elastomeren, flexiblen Poly(ethen-co-1-olefinen) in Gegenwart von Füllstoffen und oder flammhemmenden Verbindungen und Vernetzung nach der Formgebung.

Erfindungsgemäß wird dies dadurch gelöst, dass das feuchtigkeitsvernetzbare Schlauch- oder Dichtungsprofil mindestens aus den folgenden beiden Komponenten zusammengesetzt ist:.

100 Gewichtsteile der Komponente (A), bestehend aus einer silangepfropften Polyolefinmischung mit mindestens einem Polyolefinelastomer mit einer Dichte kleiner 0,92 g/cm³ und 0 bis 400 Gewichtsprozent der Komponente (B), bestehend aus einem oder mehreren anorganischen Füllstoffen und/oder halogenhaltigen Flammschutzmitteln und/oder synergistischen Flammschutzmitteln aus Antimon- und Halogenverbindungen.

Besonders bevorzugte Komponenten (A) für die Silanpfropfung sind elastomere Ethen/1-Olefin-Copolymere ausgewählt aus der Gruppe Ethen/1-Propen-, Ethen/1-Buten-, Ethen/4-methyl-1-penten-, Ethen/1-Hexen-, Ethen/1-Hepten-, Ethen/Styrol-, und Ethen/1-Octen-Copolymere. Ganz besonders bevorzugte Komponenten (A) sind Ethen/1-Octen-Copolymere mit einem 1-Octengehalt zwischen 8 und 40 Mol.-%, einer Dichte zwischen 0,85 g/cm³ und 0,92 g/cm³ und einer Molgewichtsverteilung M_{w}/Mₙ zwischen 1.5 und 3.5 und Blends aus Ethen/1-Olefin-Copolymeren mit Polypropylen-Homopolymeren, Ethen/α-Olefin-Copolymeren mit einem Ethylengehalt von mehr als 70%, Niederdruckpolyethylen, oder Propen/Ethen-Copolymere mit Ethylengehalt kleiner 15%.

Ethen/1-Octen-Co- und Terpolymere können nach dem Fachmann bekannten Methoden mit speziellen Polymerisationsverfahren z B unter Verwendung der "single site constraint geometry catalyst technology" hergestellt werden.

Besonders bevorzugte Komponenten (B) sind Calciumcarbonate, Aluminium- oder Magnesiumhydroxide, Calciumsulfate, Silikate, Kieselsäuren, Ruße, Graphite und/oder halogenhaltige organische Flammschutzmittel wie Deca-, Octa-, Pentabromdiphenylether, Hexabromdiphenoxyethan, Tetrabromphthalsäureanhydrid, Tetrabromphthalsäurediole und -polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonat-oligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-di-carboximid), Dibromethyldibromcyclohexan, Dibromneopentylglykol u/o chlorierte cycloaliphatische Verbindungen wie Dechlorane Plus oder HET-Säure. Erfindungsgemäße Komponenten (B) sind auch synergistische Kombinationen aus den aufgezählten halogenhaltigen Verbindungen mit Antimonverbindungen wie Diantimontrioxid. Bevorzugte gewichtsprozentuale Anteile der Komponenten (B) in der Mischung von (A) und (B) sind 0 bis 400 Gew.-%.

Die Aufgabe bezüglich der Entwicklung eines feuchtigkeitsvernetzbaren Schlauches oder Dichtungsprofiles aus elastomeren Poly(ethen-co-1-olefinen) ist dadurch gelöst, dass auf das Polymermaterial aus den Komponenten (A) in Gegenwart der Komponenten (B) ein Organosilan der allgemeinen Formel RSiX₃ unter Zugabe eines organischen Peroxids aufgepfropft, das Profil ausgeformt und mittels Feuchtigkeit vernetzt wird.

Bevorzugte Organosilane der allgemeinen Formel RSiX₃ sind Vinyltrimethoxysilan, Vinyltriethoxysilan oder Gamma-(meth)acryloxypropyltrimethoxysilan, bevorzugte radikalerzeugende Komponenten sind organische Alkylperoxide mit Halbwertszeiten von 0.1 h bei Temperaturen > 80°C, insbesondere 2,5-Dimethyl-2,5-di(tertbutylperoxo)hexan u/o 2,5-Dimethyl-2,5-di(tertbutylperoxo)3-hexin u/o Di(tertbutyl)peroxid u/o 1,3-Di(tertbutylperoxoisopropyl)benzol u/o Dicumylperoxid u/o Tertbutylcumylperoxid.

Ganz besonders bevorzugt sind bereits abgemischte "Silancocktails" inklusive Vernetzungskatalysator und Stabilisatoren, wie sie käuflich bei den Rohstoffherstellern zu beziehen sind.

Durch die erfindungsgemäße Verwendung von feuchtigkeitsvernetzbaren Poly(ethen-co-1-olefinen) als Basis der Schlauch- oder Dichtungsprofile können die bei der kautschuktypischen Verarbeitung und Silanpfropfung auftretenden Schwierigkeiten vermieden werden. Aufgrund des geringeren Aufwandes beim Umgang mit rieselfähigem Poly(ethen-co-1-olefin)-Granulat anstelle der Kautschukballenware ergeben sich kürzere Zykluszeiten und damit niedrigere Herstellungskosten.

Die enge Molmassenverteilung der erfindungsgemäß eingesetzten, silangepfropften Poly(ethen-co-1-olefinen) führt zu hohen Vernetzungsgraden bei reduziertem Silanverbrauch gegenüber Ethylen-Propylen-Kautschuken.

Weiterhin kann durch die erfindungsgemäße Verwendung der beschriebenen Polymergemische die Vernetzungszeit erniedrigt werden, da die diffusionskontrollierte Hydrolyse- und Kondensationsreaktion der Alkoxysilane schneller abläuft.

Das Fehlen von Doppelbindungen verleiht den erfindungsgemäßen, feuchtigkeitsvernetzbaren Schläuchen oder Dichtungsprofilen eine hohe Alterungsstabilität und natürliche UV-Stabilität. Durch Verwendung der erfindungsgemäßen Zusammensetzung sind Produkte zugänglich, welche keine Ausblüh- oder Ausschwitzungserscheinungen aufweisen und die nicht zur Verfärbung neigen.

Eine Einfärbung der erfindungsgemäßen Profile in beliebigen Farbtönen ist somit problemlos durchführbar.

Dem erfindungsgemäßen Polymermaterial können eine Reihe weiterer Verbindungen zugesetzt werden, z B Gleit- oder Verarbeitungsmittel, Nukleierungsmittel, Stabilisatoren, Antistatika, Prozessöle, Pigmente oder Treibmittel.

Unter die erfindungsgemäßen feuchtigkeitsvernetzbaren Profile aus flexiblen Polyolefinelastomeren fallen 1- und Mehrlumenschlauchleitungen für die medizinischen Anwendungen Infusion/Transfusion, Dialyse, Katheder, Urologie, Kardiologie/ECC, Anästhesie, Monitoring und Wunddrainage und dergleichen; für Anwendungen im Automobilbereich zur Kühlwasserförderung wie beheizte und unbeheizte Scheibenwasch- , Scheibenreinigungs- und Scheinwerferreinigungsanlagen und zur Lüftförderung; für Anwendungen im Maschinenbau, in der Pneumatik, in der Hydraulik, in Labor, Werkstatt und Garten wie Gartenschläuche, Getränkeschläuche, fadenarmierte, druckbeständige Industrieschläuche, Hochdruckschläuche für Reinigungssysteme, Aufschießschläuche, dekorative Brauseschläuche, Schläuche für die Landwirtschaft, spiralarmierte Vakuum- und Luftführungsschläuche, Betoninjektionsleitungen, Schläuche für Mundduschen und dergleichen. Unter die erfindungsgemäßen feuchtigkeitsvernetzbaren Profile aus flexiblen Polyolefinelastomeren fallen Dichtungsprofile, Dichtungsrahmen und Dichtungsringe für Haushaltsgeräte; Fensterabdichtungen, Dichtungsprofile für Zwischenwände und Dehnungsfugen für den Bausektor; Dichtungen im Bereich Medizintechnik; Fensterschachtabdeckungen, Scheibeneinfaßprofile, Abdeckprofile und Abdichtungen für den Automobilbereich wie auch Sonnen- und Schiebedachdichtungen und dergleichen. Unter die erfindungsgemäßen feuchtigkeitsvernetzbaren Profile aus flexiblen Polyolefinelastomeren fallen Küchen-, Wohn- und Büromöbelprofile wie Kantenbänder; Pufferprofile, Türanschlagprofile und Sockeldichtprofile und dergleichen.

### Beispiele

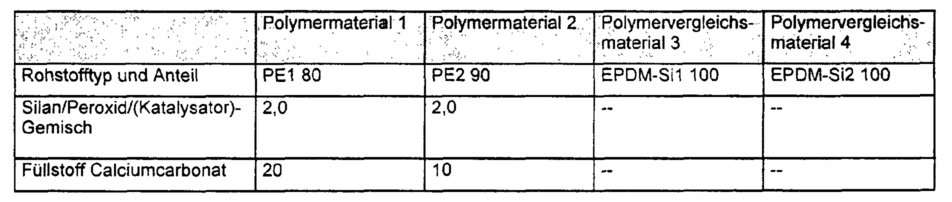

PE1: Poly(ethen-co-octen) mit Schmelzindex 1.0 g/10 min bei 190°C/2.16 kg und 0,885 g/cm³
PE2: Poly(ethen-co-octen) mit Schmelzindex 3.0 g/10 min bei 190°C/2.16 kg und 0,882 g/cm³
EPDM-Si1: Ethylen-Propylen-Dienkautschuk bereits silangepfropft
EPDM-Si2: Ethylen-Propylen-Dienkautschuk bereits silangepfropft

Mechanische Eigenschaften der erfindungsgemäßen Polymermaterialien im Vergleich zum Stand der Technik:

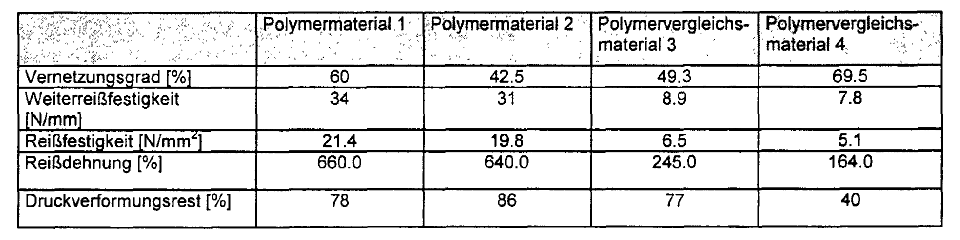

Reißfestigkeit nach ISO 527 [N/mm²]; Reißdehnung nach ISO 527 [%]; Weiterreißfestigkeit nach DIN 53507 [N/mm]; Druckverformungsrest 24h bei 70°C nach DIN 53517 [%]; Vernetzungsgrad nach DIN 16892 [%].

## Patentansprüche

1. Feuchtigkeitsvernetzbare Profile aus flexiblen Polyolefinelastomeren, **dadurch gekennzeichnet, dass** sie mindestens aus den folgenden zwei Komponenten zusammengesetzt sind:
A) 100 Gewichtsteile einer silangepfropften Polyolefinmischung mit mindestens einem Polyolefinelastomer mit einer Dichte kleiner 0.92 g/cm³ und
B) 0 bis 400 Gewichtsteile eines Füllstoffes und/oder einer halogenhaltigen Verbindung und/oder einer synergistischen Mischung aus halogenhaltigen Verbindungen mit Antimontrioxid.

2. Feuchtigkeitsvernetzbare Profile nach Anspruch 1, **dadurch gekennzeichnet , dass** das Polyolefinelastomere der Komponente (A) ein Ethylen-α-Olefin-Copolymeres mit mehr als 3 Kohlenstoffatomen ist.

3. Feuchtigkeitsvernetzbare Profile nach Ansprch 1, **dadurch gekennzeichnet , dass** Komponente (A) eine silanmodifizierte Mischung aus den Komponenten des Anspruchs 2 und einem oder mehreren kristallinen Polyolefinen mit einem Schmelzpunkt größer 100°C ist.

4. Feuchtigkeitsvernetzbare Profile nach Anspruch 1, **dadurch gekennzeichnet , dass** Komponente (B) ausgewählt ist aus der Gruppe Calciumcarbonate, Aluminium- oder Magnesiumhydroxide, Calciumsulfate, Silkate, Kieselsäuren, Ruße, Graphite und/oder halogenhaltige organische Flammschutzmittel wie Deca-, Octa-, Pentabromdiphenylether, Hexabromdiphenoxyethan, Tetrabromphthalsäureanhydrid, Tetrabromphthalsäurediole und -polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonatoligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-di-carboximid), Dibromethyldibromcyclohexan, Dibromneopentylglykol u/o chlorierte cycloaliphatische Verbindungen wie Dechlorane Plus oder HET-Säure und/oder synergistische Kombinationen aus den aufgezählten halogenhaltigen Verbindungen mit Antimonverbindungen wie Diantimontrioxid.

5. Feuchtigkeitsvernetzbare Profile nach Anspruch 1, **dadurch gekennzeichnet , dass** die silangepfropfte Polyolefinmischung in einem seperaten Pfropfungsschritt vor der Verarbeitung oder gleichzeitig mit der Verarbeitung in der Schmelze durch Reaktion von organischen Silanen der allgemeinen Formel RSiX₃ mit der Polyolefinmischung in der Gegenwart von radikalerzeugenden Komponenten erfolgt, wobei R ein olefinisch ungesättigter Kohlenwasserstoffrest und X eine hydrolisierbare organische Gruppe ist.

6. Feuchtigkeitsvernetzbare Profile nach einem der vorhergehenden Ansprüche, **dadurch gekennzeichnet , dass** das organische Silan der allgemeinen Formel RSiX₃ ausgewählt ist aus der Gruppe Vinyltrimethoxysilan, Vinyltriethoxysilan oder Gamma-(meth)acryloxypropyltrimethoxysilan.

7. Feuchtigkeitsvernetzbare Profile nach einem der vorhergehenden Ansprüche, **dadurch gekennzeichnet , dass** die radikalerzeugende Komponente ausgewählt ist aus der Gruppe Alkylperoxid, Acylperoxid, Ketonperoxid, Hydroperoxid, Peroxocarbonat, Perester, Peroxoketal u/o Peroxooligomeres ist.

8. Feuchtigkeitsvernetzbare Profile nach einem der vorhergehenden Ansprüche, **dadurch gekennzeichnet , dass** die radikalerzeugende Komponente eine Azoverbindung ist.

9. Feuchtigkeitsvernetzbare Profile nach einem der vorhergehenden Ansprüche, **dadurch gekennzeichnet , dass** die radikalerzeugende Komponente ein organisches Alkylperoxid ist, das eine Halbwertszeit von 0.1 h bei Temperaturen > 80°C aufweist.

10. Feuchtigkeitsvernetzbare Profile nach einem der vorhergehenden Ansprüche, **dadurch gekennzeichnet , dass** die radikalerzeugende Komponente ein organisches Alkylperoxid bestehend aus 2,5-Dimethyl-2,5-di(tertbutylperoxo)hexan u/o 2,5-Dimethyl-2,5-di(tertbutylperoxo)3-hexin u/o Di(tertbutyl)peroxid u/o 1,3-Di(tertbutylperoxoisopropyl)benzol u/o Dicumylperoxid u/o Tertbutylcumylperoxid ist.

11. Feuchtigkeitsvernetzbare Profile nach einem der vorhergehenden Ansprüche, **dadurch gekennzeichnet , dass** das α-Olefin der Polyolefinelastomeren mit mehr als 3 Kohlenstoffatomen in Komponente (A) ausgewählt ist aus der Gruppe bestehend aus 1-Propen, 1-Buten, 4-methyl-1-penten, 1-Hexen, 1-Hepten, 1-Octen oder Styrol.

12. Feuchtigkeitsvernetzbare Profile nach einem der vorhergehenden Ansprüche, **dadurch gekennzeichnet , dass** das kristalline Polyolefin ausgewählt ist aus der Gruppe bestehend aus Polypropylen-Homopolymeren, Ethen/α-Olefin-Copolymeren mit einem Ethylengehalt von mehr als 70%, Niederdruckpolyethylen, oder Propen/Ethen-Copolymeren mit Ethylengehalt kleiner 15%.

13. Feuchtigkeitsvernetzbare Profile nach einem der vorhergehenden Ansprüche, **dadurch gekennzeichnet, dass** das Polymermaterial einen Gelgehalt im Bereich zwischen 1% und 99.9%, im besonderen zwischen 30% und 95% aufweist.

14. Feuchtigkeitsvernetzbare Profile nach einem der vorhergehenden Ansprüche, **dadurch gekennzeichnet , dass** die Zugabe von 0 bis 200 Gewichtsteile an Zusätzen bezogen auf A - B in Form von 0 - 5 Gewichtsteilen Gleit- o Verarbeitungsmitteln, 0 - 2 Gewichtsteilen Nukleierungsmitteln, 0 - 1 Gewichtsteil Stabilisatoren, 0 - 2 Gewichtsteilen Antistatika, 0 - 100 Gewichtsteilen Prozeßölen, 0 - 5 Gewichtsteilen Pigmente und/oder 0 - 3 Gewichtsteilen Treibmittel erfolgt.

15. Feuchtigkeitsvernetzbare Profile nach einem der vorhergehenden Ansprüche, **dadurch gekennzeichnet , dass** die Zugabe eines Katalysators oder eines Katalysatorgemisches erfolgt.

16. Feuchtigkeitsvernetzbare Profile nach einem der vorhergehenden Ansprüche, **dadurch gekennzeichnet, dass** der Katalysator ausgewählt ist aus der Gruppe Dibutylzinndilaurat, Dibutylzinnoxid, Zinnoctoat, Dibutylzinnmaleat oder Titanylacetonat ist.

17. Verwendung von feuchtigkeitsvernetzbaren Profilen nach den Ansprüchen 1 bis 16 zur Herstellung von Ein- und/ oder Mehrlumenschlauchleitungen für medizinischen Anwendungen Infusion/Transfusion, Dialyse, Katheder, Urologie, Kardiologie/ECC, Anästhesie, Monitoring und Wunddrainage und dergleichen; für Anwendungen im Automobilbereich zur Kühlwasserförderung wie beheizte und unbeheizte Scheibenwasch- , Scheibenreinigungs- und Scheinwerferreinigungsanlagen und zur Lüftförderung; für Anwendungen im Maschinenbau, in der Pneumatik, in der Hydraulik, in Labor, Werkstatt und Garten wie Gartenschläuche, Getränkeschläuche, fadenarmierte, druckbeständige Industrieschläuche, Hochdruckschläuche für Reinigungssysteme, Aufschießschläuche, dekorative Brauseschläuche, Schläuche für die Landwirtschaft, spiralarmierte Vakuum- und Luftführungsschläuche, Betoninjektionsleitungen, Schläuche für Mundduschen und dergleichen, Dichtungsprofile, Dichtungsrahmen und Dichtungsringe für Haushaltsgeräte; Fensterabdichtungen, Dichtungsprofile für Zwischenwände und Dehnungsfugen für den Bausektor; Dichtungen im Bereich Medizintechnik; Fensterschachtabdeckungen, Scheibeneinfaßprofile, Abdeckprofile und Abdichtungen für den Automobilbereich wie auch Sonnen- und Schiebedachdichtungen und dergleichen,Küchen-, Wohn- und Büromöbelprofile wie Kantenbänder; Pufferprofile, Türanschlagprofile und Sockeldichtprofile und dergleichen.
